(19) Europäisches Patentamt

European Patent Office

Office européen des brevets

(11) **EP 1 642 636 A1**

(12) **EUROPÄISCHE PATENTANMELDUNG**

(43) Veröffentlichungstag:
05.04.2006 Patentblatt 2006/14

(51) Int Cl.:
*B01D 65/02* (2006.01)     *B01D 61/18* (2006.01)
*B01D 61/20* (2006.01)     *C02F 1/44* (2006.01)

(21) Anmeldenummer: 04023264.7

(22) Anmeldetag: 30.09.2004

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(71) Anmelder: **HydroSep AG**
**44629 Herne (DE)**

(72) Erfinder: **Krein, Hans-Jürgen**
**45699 Herten (DE)**

(74) Vertreter: **Sieckmann, Ralf et al**
**Cohausz Dawidowicz Hannig & Sozien**
**Patent- und Rechtsanwaltskanzlei**
**Schumannstrasse 97-99**
**40237 Düsseldorf (DE)**

(54) **Vorrichtung zur Behandlung von Flüssigkeiten, hierin enthaltenes Mittel sowie Verfahren zur Behandlung von Flüssigkeiten unter Einsatz dieser Vorrichtung und dieses Mittels**

(57) Offenbart wird eine Vorrichtung zur Behandlung von Flüssigkeiten, enthaltend wenigstens einen Membranmodulblock (4, 4', 4"), welche(r) rückspülbar (sind/ist) und rückzuspülende Flüssigkeit (1) in Konzentrat (2) und Permeat (3) trennt, dadurch gekennzeichnet, dass ausgangsseitig zum Permeat (3) an wenigstens einem der Membranmodulblöcke (4', 4") wenigstens ein Mittel (5, 5') vorgesehen ist, welches ohne Einsatz von Permeat den Durchfluss ändert, insbesondere gegenüber den anderen Membranmodulblöcken (4) den Durchfluss wenigstens teilweise verringert oder völlig abschaltet.

Fig. 3

EP 1 642 636 A1

**Beschreibung**

Die vorliegenden Erfindung betrifft eine Vorrichtung zur Behandlung von Flüssigkeiten mittels Membranmodulblöcken, ein hierbei speziell eingesetztes Mittel sowie ein Verfahren zur Behandlung von Flüssigkeiten unter Einsatz derartiger Membranmodulblöcke wie im folgenden näher erläutert

Es ist bekannt, dass sich Mikro- und Ultrafiltrationsmembranen auch im Tangentialfluss-(cross-flow-) Betrieb mit einem Filterkuchen belegen, der die Filtratleistung erheblich reduziert. Die hohe Anfangsfilterleistung der Membranen kann daher nicht aufrecht erhalten werden. Aus diesem Grund sind in der Vergangenheit weltweit in erheblichem Umfang Untersuchungen durchgeführt und Anstrengungen unternommen worden, die Gründe und Mechanismen der Deckschichtbildung aufzuklären und den Permeatfluss (die Filtratleistung) durch geeignete Gegenmaßnahmen auf einem möglichst hohen Niveau zu stabilisieren.

Aus Robert Rautenbach, Membranverfahren, Springer Verlag Berlin 1996, S. 206 ff sind als Gegenmaßnahmen z.B. eine hohe Überströmungsgeschwindigkeit, die periodische Rückspülung der Membranen mit Permeat von der Permeatseite, also gegen den Filtratfluss, die Einstellung eines hohen Zetapotentials zur Stabilisierung der zu filtrierenden Suspension, die Überlagerung der cross-flow-Strömung mit Pulsationen unterschiedlicher und wechselnder Frequenz oder die Überlagerung eines elektrischen Feldes zur Ausnutzung elektrophoretischer Kraft bekannt.

Alle diese Gegenmaßnahmen haben nicht zur Lösung des Problems geführt oder waren in der Praxis nicht oder schlecht durchführbar.

Eine hohe Tangentialströmung wird angewendet, um die Strömung oberhalb der Membran turbulent zu halten; sie benötigt einen hohen Energieeinsatz und kann dennoch nicht verhindern, dass die Strömung in Membrannähe (Wandnähe) in eine laminare Strömung umschlägt. Die Stärke der laminaren Schicht nimmt mit dem Permeatfluss durch die Membran zu, das heißt, je größer die Membranflächenleistung, desto dicker die laminare Schicht; je dicker die laminare Schicht, desto schneller die Belagbildung und dicker die Deckschicht. Die Wirkung der Transmembranströmung, also durch die Membran fließende Flüssigkeit, erzeugt hier einen ähnlichen Effekt, wie die Grenzflächenabsaugung an einer Hochleistungs-Flugzeugtragfläche. Die an der Oberfläche (der Flugzeugtragfläche oder Membran) an sich entstehende turbulente Schicht fließt durch die Perforierung (Membranporen) ab, so dass die übrige Strömung laminar bleibt. Dieser Effekt ist somit dafür verantwortlich, dass ausgerechnet die im Mikrofiltrationsbereich arbeitenden Membranen ihre hohe Anfangsleistung nicht halten können und deren Leistung schneller und stärker abfällt, als bei den weniger durchlässigen Ultrafiltrationsmembranen. Jedoch erzielt man auch bei Ultrafiltrationsmembranen durch eine hohe Überströmungsgeschwindigkeit lediglich eine Energieverschwendung und eine eingebildete Belagverhinderung durch ebenfalls eingebildete Turbulenzen.

Die Anwendung eines elektrischen Feldes (nur in wässrigen Medien möglich) ist konstruktiv außerordentlich aufwendig und erzeugt nicht nur elektrophoretische, sondern auch elektrolytische Effekte. Als Folge der Elektrolyse entstehen z.B. starke Oxidatoren (z.B. Hydroxylionen OH⁻, Peroxid, Persulfat, Hypochlorit), gegen die die Membranmaterialien nicht oder nur ungenügend beständig sind und daher die gesteigerte Membranleistung durch erhebliche kürzere Membranstandzeiten erkauft wird. Außerdem unterliegen auch die Inhaltstoffe der zu filtrierenden wässrigen Lösung (Bier, Wein, Extrakte, Salzlösungen etc.) dem Einfluss der Oxidatoren, was zu Produktveränderungen führt.

Der Erfindung liegen folgende Erkenntnisse zugrunde, die teilweise durch die Literatur bestätigt werden, während der Gesamtzusammenhang allgemein noch unbekannt zu sein scheint, weswegen die verschiedenen Autoren zu unterschiedlichen, teilweise widersprüchlichen Aussagen kommen.

Die Deckschichtbildung auf einer überströmten Membran beginnt mit der Ablagerung einer sehr dünnen polydispersen Schicht, in der ein Gemisch von großen, mittleren und kleinen Partikeln vorliegt. Diese Schicht hat aufgrund ihrer geringen Dicke und der geringen Packungsdichte des Partikelgemisches noch einen geringen Durchströmungswiderstand, was daher nur zu geringem Permeatleistungsverlust führt. In der Folgezeit verändert sich sowohl die Schichtdicke des Partikelbelages (Filterkuchens) als auch dessen Partikelzusammensetzung. Aus der polydispersen Schicht werden mit wachsender Schichtstärke erst die großen und dann auch die mittleren Partikel entfernt, so dass eine sehr feinpartikuläre Schicht mit einem hohen Durchströmungswiderstand entsteht.

Eine Vielzahl von Autoren hat hierzu Berechnungsmodelle entwickelt, die das Phänomen allerdings entweder nur unvollkommen oder nur für einen definierten Betriebszustand erklären konnten. Eigene Untersuchungen und Berechnungen haben indes gezeigt, dass das Phänomen im Wesentlichen auf dem lange bekannten und sehr einfachen, mathematisch jedoch schwer zu erfassenden Effekt der Schwertrübetrennung basiert. Die übrigen Autoren haben somit immer nur Teile der Mechanismen einer Schwertrübetrennung beschrieben und nicht erfasst, dass die Gesamtheit der Transportmechanismen einer Schwertrübetrennung als Ursache für die Ausmagerung der Grob- und Mittelkörnung aus der Deckschicht und damit für die Kompaktierung der Filterkuchenschicht verantwortlich ist.

Die Deckschicht auf der Membran entsteht im Bereich der nicht mehr turbulenten Strömung durch Ablenkung der Partikel im Flüssigkeitsstrom, der die Membran durchdringt.

Der Effekt der Schwertrübeklassierung der Deckschichtpartikel entsteht durch die Veränderung der Verhältnisse von angreifenden Kräften, die sich mit abnehmendem Permeatfluss im oberen Bereich der Deckschicht zugunsten des strömungsbedingten Auftriebs verändern.

Der Deckschichtwiderstand steigt exponentiell und der dazugehörende Permeatfluss fällt entsprechend.

Um die Filtratleistung der Membranen zu erhalten, müssen besondere Maßnahmen ergriffen werden.

In der Praxis angewendet ist die Überströmung der Membran mit hoher Geschwindigkeit, weil immer noch die Meinung vorherrscht, dass damit über der Membran eine turbulente Strömung erzeugt wird, die die Deckschichtbildung ver- oder behindert. Das heißt, dass die Kompaktierung des Filterkuchens mit zunehmender Überströmungsgeschwindigkeit beschleunigt wird, was nicht allgemein bekannt und an sich unerwünscht ist.

Dementsprechend wird in der Praxis eine weitere Maßnahme angewendet, die periodische Rückspülung, bei der die Membran von der Permeatseite mit Permeat durchströmt wird um die Deckschicht abzustoßen und durch die Membranüberströmung wegzuspülen.

Für die periodische Rückspülung wird die Permeatproduktion durch Abschaltung der Filteranlage unterbrochen und die Membran mit einem Teil des vorher erzeugten Permeats, der in einem Vorratsbehälter gespeichert wurde, zurückgespült.

Je nach Art und Menge der deckschichtbildenden Partikel ist eine derartige periodische Rückspülung nach 2-30 Minuten notwendig und dauert 10-120 Sekunden. Das heißt, dass die Anlage nicht nur (während der Rückspülung) eine erhebliche Produktionsausfallzeit hat, sondern zur Rückspülung auch noch erhebliche Mengen des produzierten Permeats verbraucht. Aus diesem Grund muss ein Kompromiss zwischen niedriger Permeatleistung, Rückspülzeit und der zeitlichen Länge des Rückspülintervalls gewählt werden.

Der vorliegenden Erfindung liegt die Aufgabe zugrunde, eine Vorrichtung zur Behandlung von Flüssigkeiten mit Membranmodulblöcken, die rückspülbar sind, bereitzustellen, bei der die vordiskutierten Probleme des Standes der Technik vermieden werden können. Die vorliegende Erfindung wird durch die im kennzeichnenden Teil von Anspruch 1 genannten Merkmale gelöst.

Die vorliegende Erfindung betrifft somit eine Vorrichtung zur Behandlung von Flüssigkeiten, enthaltend wenigstens einen Membranmodul(block/blöcke) 4, 4', 4", welche(s) rückspülbar (sind/ist) und die rückzuspülende Flüssigkeit 1 in Konzentrat 2 und Permeat 3 trennt, dadurch gekennzeichnet, dass ausgangsseitig zum Permeat 3 an wenigstens einem der Membranmodule 4', 4" wenigstens ein Mittel 5, 5' vorgesehen ist, welches ohne Einsatz von Permeat den Durchfluss ändert, insbesondere gegenüber den anderen Membranmodulen 4 den Durchfluss wenigstens teilweise verringert oder völlig abschaltet.

Durch eine derartige Vorrichtung wird die hohe Anfangsleistung der Membranen in den Membranmodulblöcken auf einem hohen Niveau stabilisiert und hierzu muss im Gegensatz zum Stand der Technik auch kein Pemeat eingesetzt werden.

Nach einer weiteren bevorzugten Ausführungsform bewirkt das Mittel 5 anstelle von oder zusätzlich zur Abschaltung des Durchflusses eine Druck- und/oder Schallbehandlung.

Nach einer weiteren bevorzugten Ausführungsform enthalten die Membranmodulblöcke Mikro- und/oder Ultrafiltrationsmembranen. Wir verweisen z.B. auf Ullmanns Encyklopädie der technischen Chemie, 4. Auflage, Band 16, 1978, Stichwort: Membranen, Seite 515 - 533.

Nach einer weiteren bevorzugten Ausführungsform der vorliegenden Erfindung, und sofern es sich bei der Flüssigkeit um ein Wasser oder Abwasser handelt, sind bei der erfindungsgemäßen Vorrichtung zusätzlich Mittel zur Reinigung und/oder Desinfektion und/oder Wasserenthärtung und/oder pH-Regulierung vorgesehen, die vorzugsweise während der Durchflussänderung in einer wirksamen Menge zugesetzt werden. Derartige Mittel sind allgemein bekannt. Wir verweisen hierzu beispielsweise auf Ullmanns a.a.O., Band 20, 1980, Stichwort: Reinigungsmittel, Seite 147 - 156, Band 10, 1975, Stichwort: Desinfektionsmittel, Seite 41 - 56 und bezüglich der Wasser enthärtenden Mittel auf die DE 196 30 826 A1, Spalte 3, Zeile 6 - 50.

Für alle sonstigen Flüssigkeiten, insbesondere wenn sie kein Wasser enthalten, ist dies nicht erforderlich.

Weitere Aufgabe der vorliegenden Erfindung ist es, ein Mittel bereitzustellen, welches in der erfindungsgemäßen Vorrichtung eingesetzt werden kann.

Dieses Mittel wird durch die kennzeichnenden Merkmale von Anspruch 5 gelöst.

Die vorliegende Erfindung betrifft somit weiterhin ein Mittel, insbesondere zur Verwendung in der Vorrichtung nach Ansprüchen 1 bis 4, dadurch gekennzeichnet, dass es sich um Ventile handelt, die insbesondere über eine pneumatische, elektrische oder elektronische Steuer- und Regelvorrichtung gesteuert werden. Derartige Ventile sind im Fachhandel erhältlich. Entsprechende pneumatische, elektrische oder elektronische Steuer- und Regelvorrichtungen können ebenfalls über den Fachhandel bezogen werden.

Nach einer weiteren bevorzugten Ausführungsform erfolgt die Steuerung der Ventile manuell oder timergesteuert.

Der vorliegenden Erfindung liegt weiterhin die Aufgabe zugrunde, ein Verfahren zur Behandlung von Flüssigkeiten unter Einsatz von Membranmodulblöcken bereitzustellen, welches in der erfindungsgemäßen Vorrichtung oder unter Verwendung des erfindungsgemäßen Mittels eingesetzt werden kann.

Ein derartiges Verfahren wird durch die kennzeichnenden Merkmale von Anspruch 7 gelöst.

Die vorliegende Erfindung betrifft somit weiterhin ein Verfahren zur Behandlung von Flüssigkeiten unter Einsatz von Membranmodulen, insbesondere mittels der Vorrichtung nach irgendeinem der Ansprüche 1 bis 4, oder unter Verwendung des Mittels gemäß irgendeinem der Ansprüche 5 oder 6, dadurch gekennzeichnet, dass wenigstens ein Teil der Membranmodule rückgespült wird, insbesondere während der Permeaterzeugung.

Nach einer bevorzugten Ausführungsform wird das erfindungsgemäße Verfahren in der Weise durchgeführt, dass die Membranmodulblöcke ohne Permeat aus anderen Membranmodulblöcken oder aus dem Vorratsbehälter rückgespült werden.

Nach einer weiteren bevorzugten Ausführungsform wird das erfindungsgemäße Verfahren in der Weise durchgeführt, dass die rückgespülten Membranmodule zusätzlich einer Pulsation ausgesetzt werden, insbesondere einer Druck- und/oder Stoßwellenbehandlung.

Nach einer weiteren bevorzugten Ausführungsform wird das erfindungsgemäße Verfahren derart durchgeführt, dass die Druck- oder Stoßwellenbehandlung durch wenigstens einen Druckstoß, durch wenigstens eine Druckwelle mittels Druckluft oder durch Ultraschall erzeugt wird.

Nach einer weiteren bevorzugten Ausführungsform wird das erfindungsgemäße Verfahren in der Weise durchgeführt, dass wenigstens ein Teil der Membranmodule wenigstens teilweise rückgespült wird.

Nach einer weiteren bevorzugten Ausführungsform des erfindungsgemäßen Verfahrens erfolgt die Rückspülung des/der Membranmoldul(s/e) mit wenigstens einer Pause von 0,5 Sekunden bis 200 Sekunden, vorzugsweise 1 - 60 Sekunden, insbesondere 5-20 Sekunden, wobei die Pausen unabhängig voneinander gewählt werden.

Die vorliegende Erfindung wird nunmehr durch ein Ausführungsbeispiel unter Einsatz von Abwasser als Flüssigkeit in Form von Figuren näher erläutert.

Es zeigt

Fig. 1 das Fließbild einer Membranfiltrationsvorrichtung nach dem Stand der Technik,
Fig. 2 das Diagramm einer periodischen Rückspülung gemäß Stand der Technik,
Fig. 3 ein Fließbild einer erfindungsgemäßen Membranfiltrationsvorrichtung und
Fig. 4 die Stabilisierung der Permeatleistung auf hohem Niveau nach der erfindungsgemäßen Vorrichtung.

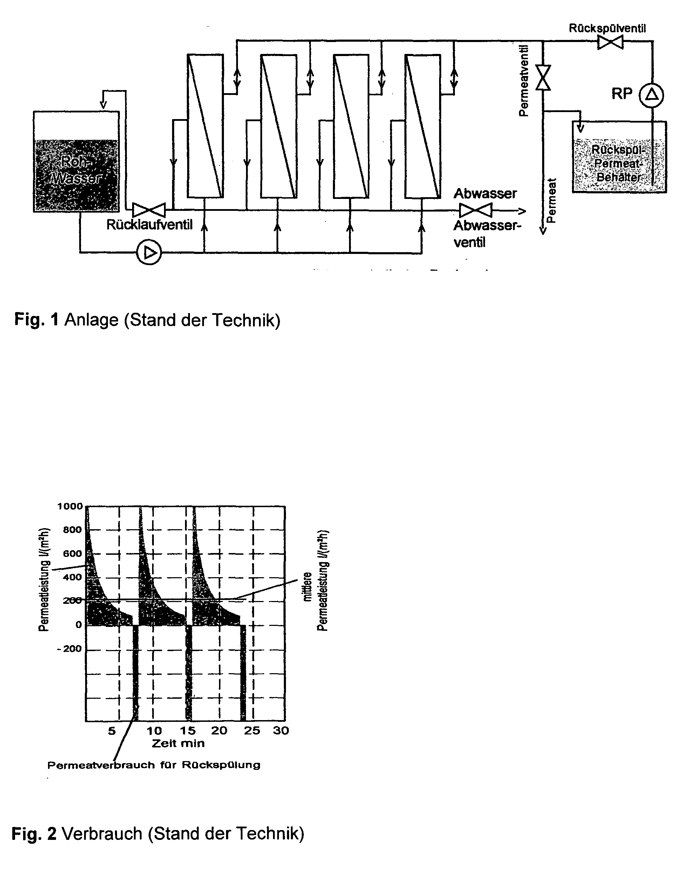

Fig. 2 (Stand der Technik) zeigt das Diagramm einer periodischen Rückspülung mit Rückspülintervallen von ca. 8 Minuten und einer Rückspülzeit von jeweils 30 Sekunden Fig. 2 (Stand der Technik) zeigt das Diagramm einer periodischen Rückspülung mit Rückspülintervallen von ca. 8 Minuten und einer Rückspülzeit von jeweils 30 Sekunden mit der dazugehörenden Permeatleistungskurve und der resultierenden mittleren Permeatleistung. Im schlechtesten Fall, also bei sehr kurzen Rückspülintervallen und langer Rückspülzeit, kann das gesamte produzierte Permeat zur Rückspülung verbraucht werden. Man wählt daher lieber eine geringere Membranflächenausbeute und installiert mehr Membranfläche.

Allerdings hat auch diese Methode ihre Grenzen. Betreibt man Membrananlagen mit Belagbildung mehrere Stunden ohne Rückspülung, dann kann sich der Belag - je nach Stoffgemisch - derart verdichten, dass für die Rückspülung ebenfalls Stunden benötigt werden, um den Belag wieder restlos oder weitestgehend zu entfernen. Das benötigte Spül-Permeatvolumen steigt dann schnell in eine unwirtschaftliche Größenordnung. Ungünstigstenfalls wird die gesamte produzierte Permeatmenge wieder zur Membranreinigung verbraucht.

Grundsätzlich gilt: Je dichter und damit adhäsiver ein Belag ist, um so mehr Permeat ist für die Belagentfernung notwendig. Der Belag löst sich nie gleichzeitig von der gesamten Membranfläche, sondern es werden zunächst einzelne kleine Teilflächen abgedrückt, an denen dann das Spül-Permeat ungehindert und nutzlos die Membran durchströmt. Um von der restlichen Membranfläche ebenfalls den Belag abzudrücken muss der Spüldruck entsprechend erhöht werden. Das führt an den bereits belagfreien Flächen zu erhöhtem nutzlosen Permeatfluss. Um die Rückspül-Permeatmenge in wirtschaftlicher Größenordnung zu halten, wird daher praktisch grundsätzlich darauf verzichtet, die Membranen wieder bis auf ihre Anfangsleistung zu reinigen. Man nimmt daher eine dauerhafte Leistungsminderung von 30-50 % in Kauf und installiert eine entsprechend größere Filterfläche.

Fig. 1 zeigt das Fließbild einer Membranfiltervorrichtung mit herkömmlicher periodischer Membranrückspülung. Während der Permeatproduktion sind Permeatventil und Rücklaufventil geöffnet und das Rückspülventil sowie das Abwasserventil geschlossen. Zur Membranrückspülung werden Rückspülventil und Abwasserventil geöffnet und das Permeatventil sowie das Rücklaufventil geschlossen; die Pumpe RP drückt dann Permeat aus dem Permeatbehälter von der Permeatseite durch die Membran. Der rohwasserseitig auf der Membran liegende Belag wird allmählich abgedrückt und ins Abwasser gespült.

Aufgrund der oben beschriebenen Ergebnisse der Untersuchungen zu Art und Verlauf der Deckschichtbildung sowie deren Veränderung im Laufe der Betriebszeit und den Problemen der Rückspülung wird klar, dass die Rückspülung möglichst bereits nach 2 - 3 Minuten Filterzeit einsetzen soll, wenn der Belag noch leicht abspülbar ist.

Die Erfindung basiert einerseits auf der Erkenntnis, dass die sich während des Filtrationsbetriebes bildende Membrandeckschicht in den ersten 30-100 Sekunden noch sehr dünn, polydispers, damit leicht entfernbar ist und eine hohe Permeatleistung zulässt. Andererseits lassen einfache Berechnungen erkennen, dass durch häufige Rückspülintervalle und die notwendige Rückspülzeit erhebliche Produktionszeit verloren geht, die das Gesamtergebnis an Permeat weiter verschlechtert.

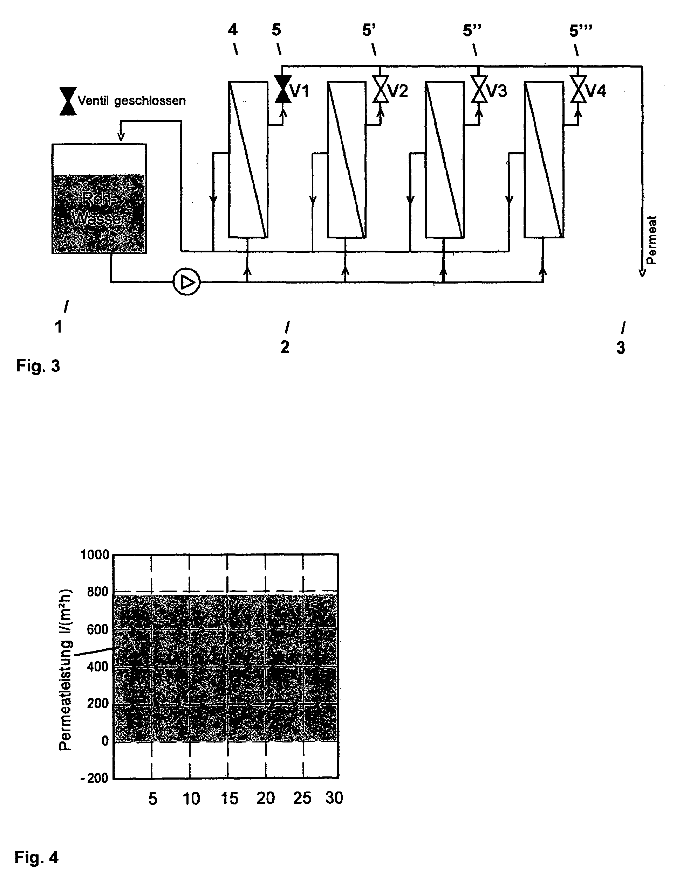

Das erfindungsgemäße System gemäß Fig. 3 schaltet daher zwecks Rückspülung nicht alle Membranmodule ab um sie gleichzeitig rückzuspülen, sondern lediglich ein Modul (bei größeren Anlagen auch zwei oder mehrere Module) und spült, während die übrigen Module Permeat produzieren, dieses eine oder diese Module zurück.

In Fig. 3 produzieren demnach 3 Module Permeat, während 1 Modul rückgespült wird. Die Permeatausgangsventile V2, V3 und V4 der Membranmodule sind geöffnet. Das heißt, diese Module produzieren Permeat. Das Permeatventil V1 ist geschlossen, Modul 1 erzeugt also kein Permeat. Hier findet eine sogenannte interne Rückspülung statt. Das Phänomen der internen Rückspülung ist bereits lange bekannt und in der Literatur als wenig wirksam beschrieben.

Immerhin ist bekannt, dass bei einer Vorrichtung gemäß Stand der Technik Fig. 1 durch Schließung des Permeatventils für 2-5 Minuten die Permeatleistung nach der Öffnung des Ventils um 10-15 % ansteigt und dann wieder langsam abfällt.

Die Untersuchung dieses Phänomens ergab, dass gem. der Bernoulli-Gleichung auf der Überströmungsseite der Membran Unterdruck entsteht. Dieser Unterdruck entsteht bei geschlossenem Permeatventil und saugt zonenweise aus dem Permeatraum des Membrandruckrohres Permeat durch die Membran auf die Überströmungsseite der Membran. Gleichzeitig bilden sich Überdruckzonen, in denen Flüssigkeit durch die Membran auf die Permeatseite fließt, die den dort entstandenen Unterdruck ausgleicht. Überdruckzonen bilden sich dort, wo der Belag weniger dicht ist. Unterdruckzonen bilden sich über dichterem Belag. In der Unterdruckzone kommt es dann zur partiellen Belagablösung und Entfernung. Hierdurch wird die Durchlässigkeit der Membran erhöht, die Unterdruckzone bricht zusammen und bildet sich an anderer Stelle. Die sich ständig an anderen Stellen der Membran bildenden und zusammenbrechenden Unterdruckzonen erzeugen zudem Vibrationen innerhalb der Flüssigkeit, mit - je nach Tangentialströmungsgeschwindigkeit - Frequenzen von 50-200 Hz, die lockere polydisperse Ablagerungen wirksam entfernen.

Andererseits sind die entstehenden Kräfte zu gering, um dichte und verfestigte feindisperse Beläge zu entfernen. Das erklärt, warum diese Methode als wenig wirksam beschrieben wird, da jedwede Reinigung der Membranen bisher immer dann angewendet wurde, wenn ein verminderter Permeatfluss feststellbar, also bereits ein verfestigter feindisperser Belag vorhanden war.

Das erfindungsgemäße Verfahren nach Fig. 3 wartet die Bildung dichter festsitzender Beläge auf der Membran und einen hierdurch bedingten verminderten Permeatfluß nicht ab, sondern reinigt die sich auf der Membran ablagernden Partikel bereits innerhalb der ersten 1-3 Minuten ab, lange bevor eine Leistungsminderung durch dichte Beläge entstehen kann.

Nach jeweils wenigen Sekunden (2 - 20 Sekunden, je nach belagbildendem Produkt) wechselt die Rückspülung also die Schließung des Permeatventils von Modul 1 auf Modul 2, danach auf Modul 3, danach auf Modul 4, dann wieder auf Modul 1 usw.

Da diese Art der Rückspülung sofort mit der Permeaterzeugung, also zu Beginn der Partikelablagerung wirksam wird, ist die Ablagerung leicht entfernbar. Die Rückspülzeit dauert daher im Regelfall nur 2-5 Sekunden. Für das gezeigte Modell mit 4 Modulen heißt das, dass jeder Modul bereits nach 8 - 20 Sekunden wieder rückgespült wird.

In Anlagen mit 20, 30 oder mehr Modulen müssen unter Umständen 2, 3 oder mehr Module gleichzeitig rückgespült werden, um die Rückspülintervalle der einzelnen Module nicht soweit zu verlängern, dass die Membranleistung abfällt.

Eine Flüssigkeiten im Sinne der vorliegenden Erfindung enthält überwiegend ein organisches oder wässriges Lösemittel in Form einer Lösung oder Suspension zusammen mit den abzufiltrierenden Komponenten. Bei Produkten mit schwierigem Filtrationsverhalten, z.B. bei der Filtration von Harzlösungen, der Latex-Konzentrierung oder der Entfernung von biologischem Zellmaterial, können auch längere Rückspülzeiten notwendig werden (20 - 30 Sekunden). Hier müssen aus oben erwähntem Grund bei einer größeren Modulanzahl dann ebenfalls zwei oder mehrere Module gleichzeitig rückgespült werden; gleichzeitig kann es hier notwendig sein, die Anzahl der Module zu erhöhen, um kurze Rückspülintervalle realisieren zu können. Die Erhöhung der Modulanzahl muss nicht gleichzeitig eine Erhöhung der Filterfläche bedeuten, sondern kann auch dadurch erreicht werden, dass kleinere Module benutzt werden, also die benötigte Membranfläche nur auf mehr Module verteilt wird.

Diese Methode stabilisiert die Membranleistung auf einem wesentlich höheren Niveau so, dass durch die gleiche Filterfläche mehr Permeat erzeugt wird, als es bei herkömmlicher Rückspülung möglich ist, obwohl praktisch ständig ein Modul abgeschaltet ist. Außerdem wird kein Permeat für die Rückspülung verbraucht.

Fig. 4 zeigt das Leistungsdiagramm des erfindungsgemäßen Rückspülverfahrens für das gleiche zu filtrierende Medium wie in Fig. 2 (Stand der Technik), aus dem erkennbar ist, dass die Membran-Flächenleistung auf einem hohen Niveau praktisch stabil gehalten werden kann.

Die Steigerung der Membranleistung soll nachfolgend noch in einigen Rechenbeispielen verglichen werden, die auch zeigen, wie sich die Verteilung der Filterarbeit auf eine größere Modulanzahl auswirkt.

Zunächst soll das gezeigte Modell mit 4 Modulen und herkömmlicher periodischer Rückspülung mit dem Modell mit 4 Modulen und produktionsintegrierter Rückspülung verglichen werden.

Die Vorrichtung gemäß Stand der Technik Fig. 1 enthält 4 Module mit jeweils 2,5 m$^2$ Membranfläche. Gemäß Fig. 2 wurde eine durchschnittliche Membranflächenleistung von 210 Liter je m$^2$ und Stunde erreicht.

$$4 \text{ x } 2{,}5 \text{ x } 210 = 2100 \text{ Liter je Stunde}$$

Die erfindungsgemäße Vorrichtung gemäß Fig. 3 enthält ebenfalls 4 Module mit jeweils 2,5 m$^2$ Membranfläche, von denen jedoch 1 Modul außer Betrieb ist (Rückspülung). Gemäß Fig. 4 wurde eine durchschnittliche Membranflächenleistung von 780 Liter je m$^2$ und Stunde erreicht.

Die Rückspülzeit beträgt 3 Sekunden, der Rückspülwechsel zum nächsten Modul ist ohne Pause geschaltet. Daraus resultiert ein Rückspülintervall von

$$4 \text{ x } 3 = 12 \text{ Sekunden.}$$

Die Leistung berechnet sich:

$$3 \text{ x } 2{,}5 \text{ x } 780 = 5850 \text{ Liter / Stunde.}$$

Die gleiche Rechnung ergibt sich aus einer Rückspülzeit von 3 Sekunden, dem Rückspülwechsel zum nächsten Modul ohne Pause und einer Pause von 24 Sekunden am Ende des Rückspülzyklus (nach Rückspülung der 4 Module). Es ergibt sich ein Rückspülintervall von:

$$4 \text{ x } (3{+}6) = 36 \text{ Sekunden.}$$

Die Leistung berechnet sich dann:

$$3 \text{ x } 2{,}5 \text{ x } 780 = \quad 5850 \text{ Liter / Stunde,}$$
$$2/3 \text{ x } 2{,}5 \text{ x } 780 = \quad \underline{1300 \text{ Liter / Stunde aus dem 4. Modul}}$$
$$6500 \text{ Liter Stundenleistung.}$$

Vergleichsweise soll die Leistung einer Anlage berechnet werden, bei der die Filterfläche von 10 m$^2$ auf 12 Module verteilt wurde. Die Rückspülzeit beträgt 3 Sekunden, der Rückspülwechsel zum nächsten Modul ist ohne Pause geschaltet. Daraus resultiert ein Rückspülintervall von

$$12 \text{ x } 3 = 36 \text{ Sekunden.}$$

Die Leistung berechnet sich dann:

$$11 \text{ x } 0{,}833 \text{ x } 780 = 7147 \text{ Liter / Stunde,}$$

Die Berechnungen zeigen, dass sich die Anlagenleistung bei gleicher Membranfläche durch den Einsatz der erfindungsgemäßen Rückspülung, gegenüber der herkömmlichen periodischen Rückspülung, mehr als verdreifachen lässt.

Ein weiterer Vorteil ist das geschlossene Rückspülsystem und der Verzicht auf einen (offenen) Rückspülbehälter. Durch die Mikro- oder Ultrafiltration erhält man keimfreies Permeat, weil Bakterien etc. größenbedingt die Membranporen nicht passieren können. Ein mehr oder weniger offenes Rückspülsystem mit einem Permeatbehälter beinhaltet die Gefahr der Wiederbekeimung des Permeats. Werden die Membranen mit bekeimtem Permeat rückgespült, dann bildet sich auf der Permeatseite der Membran ein Biofilm, der nur schwer entfernbar ist und in kurzen Abständen (täglich) eine intensive Desinfektion der Anlage notwendig macht.

**Patentansprüche**

1. Vorrichtung zur Behandlung von Flüssigkeiten, enthaltend wenigstens einen Membranmodulblock (4, 4', 4"), welche (r) rückspülbar (sind/ist) und rückzuspülende Flüssigkeit (1) in Konzentrat (2) und Permeat (3) trennt, **dadurch gekennzeichnet, dass** ausgangsseitig zum Permeat (3) an wenigstens einem der Membranmodulblöcke (4', 4") wenigstens ein Mittel (5, 5') vorgesehen ist, welches ohne Einsatz von Permeat den Durchfluss ändert, insbesondere gegenüber den anderen Membranmodulblöcken (4) den Durchfluss wenigstens teilweise verringert oder völlig abschaltet.

2. Vorrichtung nach Anspruch 1, **dadurch gekennzeichnet, dass** das Mittel (5) anstelle von oder zusätzlich zur Abschaltung des Durchflusses eine Druck- und oder Schallbehandlung bewirkt.

3. Vorrichtung nach Anspruch 1, **dadurch gekennzeichnet, dass** die Membranmodulblöcke (4, 4', 4") Mikro- und / oder Ultrafiltrationsmembranen enthalten.

4. Vorrichtung nach irgendeinem der Ansprüche 1 bis 3, **dadurch gekennzeichnet, dass** weiterhin bei Verwendung von Wasser oder Abwasser als Flüssigkeit Mittel zur Reinigung und / oder Desinfektion und / oder Wasserenthärtung und / oder pH-Regelung vorgesehen werden, die vorzugsweise während der Durchflussänderung in einer wirksamen Menge zugesetzt werden.

5. Mittel, insbesondere zur Verwendung in der Vorrichtung nach Ansprüchen 1 bis 4, **dadurch gekennzeichnet, dass** es sich um Ventile handelt, die insbesondere über eine pneumatische, elektrische oder elektronische Steuer- und Regelvorrichtung gesteuert werden.

6. Mittel nach Anspruch 5, **dadurch gekennzeichnet, dass** die Steuerung der Ventile manuell oder timergesteuert erfolgt.

7. Verfahren zur Behandlung von Flüssigkeiten, vorzugsweise Wasser und/oder Abwasser unter Einsatz von Membranmodulblöcken, insbesondere mittels der Vorrichtung nach irgendeinem der Ansprüche 1 bis 4, oder unter Verwendung des Mittels gemäß irgendeinem der Ansprüche 5 oder 6, **dadurch gekennzeichnet, dass** wenigstens ein Teil der Membranmodulblöcke rückgespült wird, insbesondere während der Permeaterzeugung.

8. Verfahren nach Anspruch 7, **dadurch gekennzeichnet, dass** die Membranmodulblöcke ohne Permeat aus anderen Membranmodulblöcken oder aus einem Vorratsbehälter rückgespült werden.

9. Verfahren nach irgendeinem der Ansprüchen 7 oder 8, **dadurch gekennzeichnet, dass** die rückgespülten Membranmodulblöcke zusätzlich einer Pulsation ausgesetzt werden, insbesondere einer Druck- und / oder Stoßwellenbehandlung.

10. Verfahren nach Anspruch 9, **dadurch gekennzeichnet, dass** die Druck- oder Stoßwellenbehandlung durch wenigstens einen Druckstoß, durch wenigstens eine Stoßwelle mittels Druckluft oder durch Ultraschall erzeugt wird.

11. Verfahren nach irgendeinem der Ansprüche 7 bis 10, **dadurch gekennzeichnet, dass** wenigstens ein Teil der Membranmodulblöcke wenigstens zeitweise rückgespült wird.

12. Verfahren nach Anspruch 11, **dadurch gekennzeichnet, dass** die Rückspülung des / der Membranmodul (blocks/blöcke) mit wenigstens einer Pause von 0,5 Sekunden bis 200 Sekunden, vorzugsweise 1 bis 60 Sekunden, insbesondere 5 bis 20 Sekunden, erfolg(t/en), wobei die Pausen unabhängig voneinander gewählt werden.

**Fig. 1** Anlage (Stand der Technik)

**Fig. 2** Verbrauch (Stand der Technik)

4  5        5'           5''          5'''

Ventil geschlossen

V1    V2    V3    V4

Roh-
Wasser

Permeat

1                    2                          3

**Fig. 3**

Permeatleistung l/(m²h)

1000
800
600
400
200
0
-200

5  10  15  20  25  30

**Fig. 4**

**Europäisches Patentamt**

# EUROPÄISCHER RECHERCHENBERICHT

Nummer der Anmeldung

EP 04 02 3264

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 2004/024304 A2 (PALL CORPORATION; AOYAMA, KAZUMI; KURASHIMA, HIDEKI; GOTO, TAKUMI; HUR) 25. März 2004 (2004-03-25) * Absatz [0026] - Absatz [0031] * ----- | 1-11 | B01D65/02 B01D61/18 B01D61/20 C02F1/44 |
| X | WO 03/035234 A1 (BIN-X APS; BINAU, GEORGE; BIN-X A/S) 1. Mai 2003 (2003-05-01) * Seite 7, Zeile 28 - Zeile 32 * * Seite 10, Zeile 32 - Seite 12, Zeile 24 * ----- | 1-9,11 | |
| X | DE 102 16 170 A1 (MARITIME CONTRACTORS DEUTSCHLAND LTD., LONDON) 30. Oktober 2003 (2003-10-30) * das ganze Dokument * ----- | 1-7 | |
| X | FR 2 716 385 A1 (DUMEZ LYONNAISE EAUX) 25. August 1995 (1995-08-25) * das ganze Dokument * ----- | 1-3,5-11 | |
| X | US 6 656 359 B1 (OSUDA HIROSHI ET AL) 2. Dezember 2003 (2003-12-02) * Spalte 3, Zeile 66 - Spalte 6, Zeile 42; Abbildung 2 * ----- | 1-3,6,7,9 | RECHERCHIERTE SACHGEBIETE (Int.Cl.7) B01D C02F |
| X | WO 88/00494 A1 (MEMTEC LIMITED) 28. Januar 1988 (1988-01-28) * das ganze Dokument * ----- | 1-3,5,7-11 | |
| X | WO 03/024575 A1 (US FILTER WASTEWATER GROUP, INC; JOHNSON, THOMAS, WARREN; BECK, THOMAS) 27. März 2003 (2003-03-27) * das ganze Dokument * ----- | 1,5,7 | |
| X | DE 44 01 456 A1 (WISSENSCHAFTSFOERDERUNG DER DEUTSCHEN BRAUWIRTSCHAFT E.V., 53175 BONN,) 20. Juli 1995 (1995-07-20) * das ganze Dokument * ----- | 1,5,7 | |

-/--

Der vorliegende Recherchenbericht wurde für alle Patentansprüche erstellt

| Recherchenort | Abschlußdatum der Recherche | Prüfer |
|---|---|---|
| München | 26. Januar 2005 | Marti, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

**Europäisches Patentamt**

## EUROPÄISCHER RECHERCHENBERICHT

Nummer der Anmeldung

EP 04 02 3264

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 645 174 A1 (X-FLOW B.V)<br>29. März 1995 (1995-03-29)<br>* Beispiel 5 *<br>----- | 7,9-12 | |
| | | | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| München | 26. Januar 2005 | Marti, P |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
..............................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**     EP 04 02 3264

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-01-2005

| Im Recherchenbericht angeführtes Patentdokument | Datum der Veröffentlichung | Mitglied(er) der Patentfamilie | | Datum der Veröffentlichung |
|---|---|---|---|---|
| WO 2004024304 A2 | 25-03-2004 | KEINE | | |
| WO 03035234 A1 | 01-05-2003 | DK | 200100286 U4 | 14-02-2003 |
| | | EP | 1450939 A1 | 01-09-2004 |
| | | US | 2004262205 A1 | 30-12-2004 |
| DE 10216170 A1 | 30-10-2003 | KEINE | | |
| FR 2716385 A1 | 25-08-1995 | KEINE | | |
| US 6656359 B1 | 02-12-2003 | JP | 3426149 B2 | 14-07-2003 |
| | | JP | 2000190223 A | 11-07-2000 |
| | | KR | 2000047425 A | 25-07-2000 |
| | | TW | 525241 B | 21-03-2003 |
| | | US | 2004069878 A1 | 15-04-2004 |
| WO 8800494 A1 | 28-01-1988 | AT | 117585 T | 15-02-1995 |
| | | AU | 582968 B2 | 13-04-1989 |
| | | AU | 7706687 A | 10-02-1988 |
| | | DE | 3751029 D1 | 09-03-1995 |
| | | DE | 3751029 T2 | 18-05-1995 |
| | | DK | 131288 A | 11-05-1988 |
| | | EP | 0289523 A1 | 09-11-1988 |
| | | ES | 2014516 A6 | 16-07-1990 |
| | | JP | 8008980 B | 31-01-1996 |
| | | JP | 1500732 T | 16-03-1989 |
| | | US | 4935143 A | 19-06-1990 |
| WO 03024575 A1 | 27-03-2003 | CA | 2460207 A1 | 27-03-2003 |
| | | EP | 1441841 A1 | 04-08-2004 |
| | | US | 2004238442 A1 | 02-12-2004 |
| DE 4401456 A1 | 20-07-1995 | AT | 185595 T | 15-10-1999 |
| | | AU | 685905 B2 | 29-01-1998 |
| | | AU | 1535995 A | 08-08-1995 |
| | | BR | 9505827 A | 12-03-1996 |
| | | CA | 2158071 A1 | 20-07-1995 |
| | | CZ | 9502716 A3 | 15-05-1996 |
| | | DE | 59507024 D1 | 18-11-1999 |
| | | WO | 9520038 A1 | 27-07-1995 |
| | | EP | 0689585 A1 | 03-01-1996 |
| | | HU | 72368 A2 | 29-04-1996 |
| | | JP | 8512244 T | 24-12-1996 |
| | | PL | 310662 A1 | 27-12-1995 |
| | | US | 6692786 B1 | 17-02-2004 |
| | | ZA | 9500384 A | 21-09-1995 |

EPO FORM P0461

Für nähere Einzelheiten zu diesem Anhang : siehe Amtsblatt des Europäischen Patentamts, Nr.12/82

**EP 1 642 636 A1**

**ANHANG ZUM EUROPÄISCHEN RECHERCHENBERICHT
ÜBER DIE EUROPÄISCHE PATENTANMELDUNG NR.**                    EP 04 02 3264

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-01-2005

| Im Recherchenbericht angeführtes Patentdokument | Datum der Veröffentlichung | Mitglied(er) der Patentfamilie | Datum der Veröffentlichung |
|---|---|---|---|
| EP 0645174 A1 | 29-03-1995 | NL 9301653 A | 18-04-1995 |
| | | AT 213660 T | 15-03-2002 |
| | | CA 2132682 A1 | 25-03-1995 |
| | | DE 69419296 D1 | 11-07-2002 |
| | | DE 69419296 T2 | 13-02-2003 |
| | | DK 645174 T3 | 22-11-1999 |
| | | ES 2135536 T3 | 01-10-2002 |
| | | JP 7155559 A | 20-06-1995 |
| | | US 5560828 A | 01-10-1996 |

EPO FORM P0461

Für nähere Einzelheiten zu diesem Anhang : siehe Amtsblatt des Europäischen Patentamts, Nr.12/82